Europäisches Patentamt

(19) European Patent Office

Office européen des brevets

(11) Publication number: **0 005 340**
**B1**

## EUROPEAN PATENT SPECIFICATION

(45) Date of publication of patent specification: **26.01.83**

(51) Int. Cl.³: **B 21 B 15/00**

(21) Application number: **79300686.7**

(22) Date of filing: **24.04.79**

(54) Heat shield arrangements for material e.g. in strip or bar form.

(30) Priority: **27.04.78 GB 1670478**

(43) Date of publication of application:
**14.11.79 Bulletin 79/23**

(45) Publication of the grant of the patent:
**26.01.83 Bulletin 83/4**

(84) Designated Contracting States:
**BE DE FR IT LU NL**

(56) References cited:
FR - A - 1 416 688
GB - A - 1 040 420
US - A - 1 676 176
US - A - 1 959 095
US - A - 3 606 778

(73) Proprietor: **ENCOMECH ENGINEERING SERVICES LIMITED**
**729 London Road**
**Hounslow, TW3 1SE (GB)**

(72) Inventor: **Laws, William Robert**
**19 Tudor Avenue**
**Worcester Park Surrey (GB)**
Inventor: **Reed, Geoffrey Ronald**
**8 Beechdene**
**Tadworth Surrey (GB)**

(74) Representative: **Gura, Henry Alan et al,**
**MEWBURN ELLIS & CO. 2/3 Cursitor Street**
**London EC4A 1BQ (GB)**

Courier Press, Leamington Spa, England

Heat shield arrangements for material e.g. in strip or bar form

This invention relates to heat shields and it is concerned particularly, but not exclusively, with heat shields for use in metal processing.

In steel mill processing whether of billets, strip or sections, the metallurgical qualities of finished product are closely related to the accurate control of temperature of the material during the hot rolling process. For example, a modern hot strip mill producing steel coil is several hundred metres long and, typically, steel slabs or billets may be reduced from 25 cm thickness to 0.2 cm using several roughing mill stands and five or more finishing mill stands. During the rolling process considerable heat losses occur so that the slabs have to be heated initially well in excess of the temperature requirement at the end of the process, but a particular problem has been that the heat losses from slabs passing along the mill depend upon the time taken. If the slabs are delayed, excessive heat losses occur and the steel strip does not have its required rolling temperatures, so that it may have to be downgraded or even scrapped. In many long modern rolling mills the delay of one length of strip at the finishing end has an effect on the several lengths of material which are simultaneously at various preceding stages of rolling. Thus with more stringent quality specifications it is becoming more important to reduce the rate of heat loss from the material during transport between stands.

There is an added difficulty in this because during the final reduction stages the back end of the strip takes longer to pass through the finishing mills and so there is a temperature "run-down" along the steel strip due to the cumulative time delay along the length of the strip. The effect of temperature "run-down" is to some extent ameliorated by accelerating the finishing mills during the rolling of each individual slab or strip, but nevertheless it remains a problem.

Attempts have been made in the past to reduce the heat loss from the top surface of a hot strip during transport from the roughing mills to the finishing mills. Because radiation is a major source of heat loss at the temperatures involved (around 1060°C) aluminium reflectors have been fixed over the path of the hot strip to reduce temperature "run-down". However, maintenance problems limit the usefulness of reflectors which become inefficient as soon as they become dirty, and in addition, the aluminium reflectors which have been used for their high reflectivity and relatively low cost can reach their melting temperature if their reflectivity decreases.

It has been proposed (GB—A—1 040 420) to use heat-insulating or reflecting panels as heat shields that present to the hot material a face formed by a thin plate of stainless steel backed by a core of thermal insulation, so that the plate forming the hot face of the panel is preheated to a luminous temperature close to that of the material being processed. In this arrangement, however, the panel could be easily damaged if there is a malfunction that causes material being processed to strike the panel, for example if the material is bent or if it lifts as it runs along its path. A mishap of this kind can easily occur in a steel rolling mill in which the steel stock is often travelling at very high speeds.

According to the present invention, there is provided a heat shield arrangement for hot material being processed in a hot-rolling mill, e.g. for metal strip or for rolled metal sections, the arrangement comprising a series of heat insulating panels above the path of the material being processed, the panels each having a heat-insulating core and a cover plate forming or overlying a main face of the panel being adapted to act as a hot face presented to the material being processed and to radiate heat back to the material, characterised in that the series of panels are provided with drive means for displacing them on their supports upwardly away from the path of the material and sensing means being provided comprising a contact member upwardly displaceable relative to the panels being provided to detect lifting or distortion of the material and to actuate automatically said drive means to lift the panels away from the material to protect them against damage.

It is thus possible to provide contact elements projecting downwardly in the region of the cover plates of the upper group of panels to below the level of the cover plates, said contact elements being of a relative robust nature compared with the panel cover plates and acting as sensing means for operating control means that actuate said panel displacement means, whereby if the material lifts and strikes the contact means the displacement means are immediately actuated to lift the panels away from the hot strip material.

An arrangement according to the invention for use in the processing of material in the form of hot strip or billets may have the panels arranged in groups of two or more disposed side-by-side and automatically displaceable independently of said contact member under the action of control means to vary their heat-insulating effect on a central region of the material relative to the lateral margins thereof, said control means being actuable by at least one array of temperature sensors laterally spaced across the material path. Preferably, for said variation of their heat-insulating effect said panels disposed side-by-side are arranged to be displaceable laterally towards and away from each other and/or to be tilted to move the laterally outer regions of the panels towards and away from the material path. This can be done to compensate for the possibility that there will be significant temperature differences across the width of a sheet-like hot material.

A heat shield arrangement according to the invention preferably also has heat-insulating panels disposed below the material path. These panels also may be arranged to be displaceable for varying the heat-insulating effect across the width of the material, e.g. by providing means for moving them laterally towards and away from each other.

On a conventional strip mill delay table, the sheet material path is defined by a series of rollers on which the material is supported. According to a preferred feature of the invention, said rollers comprise upper smaller diameter rollers upon which the material rests, and lower larger diameter rollers that support the upper rollers. In this way, it is possible to increase the proportion of the lower face of the material path that is shielded by the lower series of heat-insulating panels, since these panels can overlap the larger rollers to extend close to the upper, smaller diameter rollers.

There is a further advantage arising from the use of the smaller diameter upper rollers in that the heat transfer by conduction through these will be less than for the larger diameter rollers of a conventional rolling mill table. This loss can be still further reduced by limiting the contact area between the upper and lower rollers, in particular by arranging that the upper rollers are only in contact with a plurality of axially spaced larger diameter portions formed on the lower rollers.

Preferably, the upper series of panels are mounted on support means provided with a raising mechanism which allows them to be raised to gain access to the conveying path, and the raising mechanism may be arranged to operate automatically to protect the panels should there be a malfunction that causes the material being processed to lift and strike the panels.

The control of the temperature of material being processed by varying the heat shielding effect transversely across the material is not appropriate in some instances, for example in processing narrow cross-section materials such as bars and rolled sections. In these instances, the panels of a heat shield arrangement according to the invention may form a tubular enclosure to surround all sides of the material path with the upper and lower regions of said conduit being provided by respective upper and lower panels, and at least some of the panels being mounted on displaceable support means to open the tubular enclosure.

Conveniently, contact means for the material being processed are provided for operation of the displacement means of the displaceably mounted panels in order to lift said panels away to avoid damage by material that is distorted or that has lifted, as already discussed.

In a preferred construction for the performance of the invention, each panel comprises a core of fibrous ceramic material providing a heat-insulating layer and enclosed in a protective casing, the cover plate forming or overlying a main face of said casing and being capable of relative thermal expansion with respect to adjoining regions of the casing. If the cover plate is made relatively thin to have a low thermal capacity, at least a part of its area may be provided with dimples, corrugations or other locally contoured formations to increase the heat emissivity of its surface and such contouring may also be arranged to contribute to the strength of the cover plate and its ability to withstand thermal stresses, as well as to allow a measure of independent thermal expansion by flexure.

The casing may comprise a peripheral housing that supports the cover plate in a manner that permits relative thermal expansion of the cover layer, and the opposite main face of the panel forming its cold face may similarly be provided with a cover plate mounted in a manner permitting relative thermal expansion, so that thermal stresses on the casing are kept to a minimum.

Preferably, the casing provides a substantially dust-tight enclosure for the insulating core and venting apertures may be arranged in the casing for the escape of air and steam from within, the apertures being provided with valves for preventing or limiting a return flow through them.

The invention will be described by way of example with reference to the accompanying diagrammatic drawings, wherein:—

Fig. 1 is a transverse cross-section of a transfer conveyor or roller table in a steel strip mill provided with a heat shield arrangement according to the invention, and also shows in outline some of the modes of adjustment of the arrangement,

Fig. 2 is a schematic illustration of the control means for the arrangement of Fig. 1,

Fig. 3 illustrates the movement of the support arms in the arrangement of Fig. 1,

Fig. 4 illustrates a protective device for the arrangement of Fig. 1,

Fig. 5 is a longitudinal vertical cross-section showing details of the heat insulation panels in the arrangement of Fig. 1,

Figs. 6 and 7 illustrate details of a modified panel front plate construction for use in the invention,

Fig. 8 is a longitudinal section showing a feature of a heat shield arrangement according to the invention that may be also used in conjunction with the arrangement of Fig. 1,

Figs. 9 and 10 illustrate in mutually transverse sections a modified roller construction that can be employed in a roller table provided with a heat shield arrangement according to the invention,

Fig. 11 is a transverse cross-section of a further heat shield arrangement according to the invention, and

Figs. 12 and 13 show schematically alternative heat-insulation panels for the arrangement in Fig. 11.

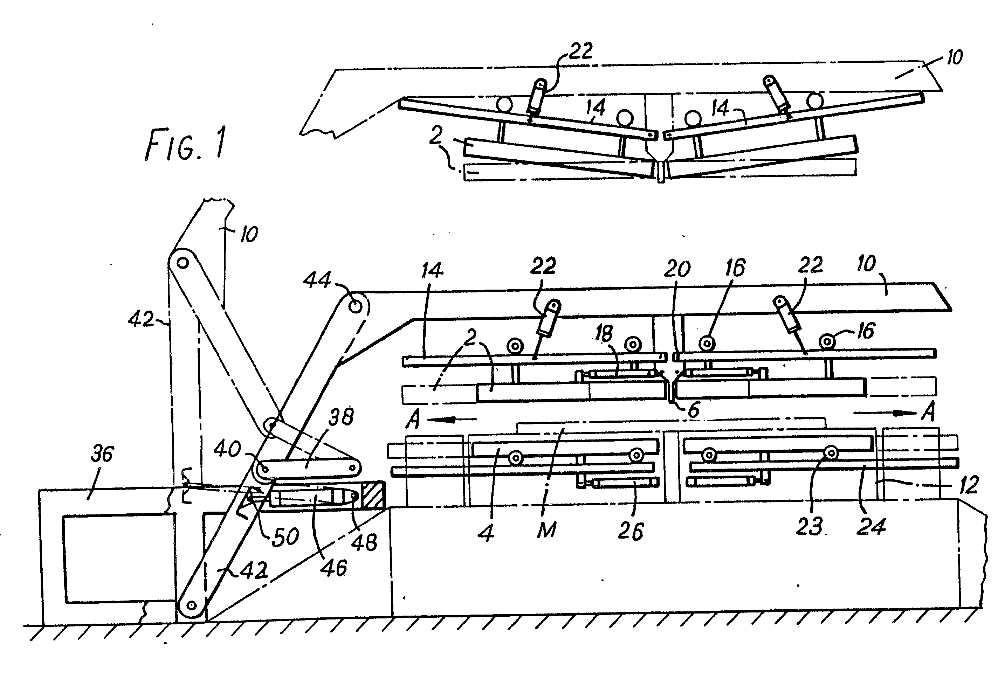

Referring firstly to Fig. 1 of the drawings, respective upper and lower series of heat-insulating panels 2, 4 are mounted above and below the material path along a roller table of a steel strip mill. The panels of each series are shown mounted in pairs side-by-side but in wider mills four panels side-by-side may be required. The panels are arranged in a row or rows extending along the strip-conveying direction to make up the required heat shield area. Running longitudinally with the upper series of panels, but not directly secured to them are skid or bumper bars 6 or like contact members that project below the panels intermediate their width.

The upper panels 2 are mounted on displaceable support means comprising a series of cantilever arms 10 at intervals along the material path, each arm extending over the conveyor rolls 12 for the steel strip M. so that the panels are able to cover the entire upper face of the strip. The cantilever arms are displaceable to move the panels towards and away from the strip, and the panels themselves are displaceable on the support structure to regulate their effect on the strip.

For the latter purpose the panels 2 may be conveniently arranged in pairs with the central bumper bar 6 independently mounted between them. The panels are supported by transverse guides or rails 14 that are secured below the cantilever arms and are suspended from rollers 16 running on the rails so that they can be displaced laterally towards and away from each other by first displacement means consisting of rams 18 as indicated by the arrows A in Fig. 1. Each rail is pivoted at its inner end 20 and connected by further displacement means consisting of rams 22 to the arms 10, so that by operation of the rams the rails can be tilted about their pivots, and in particular can be so tilted as to raise the laterally outer edges of the panels as shown in outline in Fig. 1. The lower heat shield panels 4 below the strip path are also mounted through rollers 23 on rails 24 or like guides, which in this instance are fixed, so as to be movable laterally inwards and outwards by displacement means consisting of rams 26 in the same manner as the upper panels.

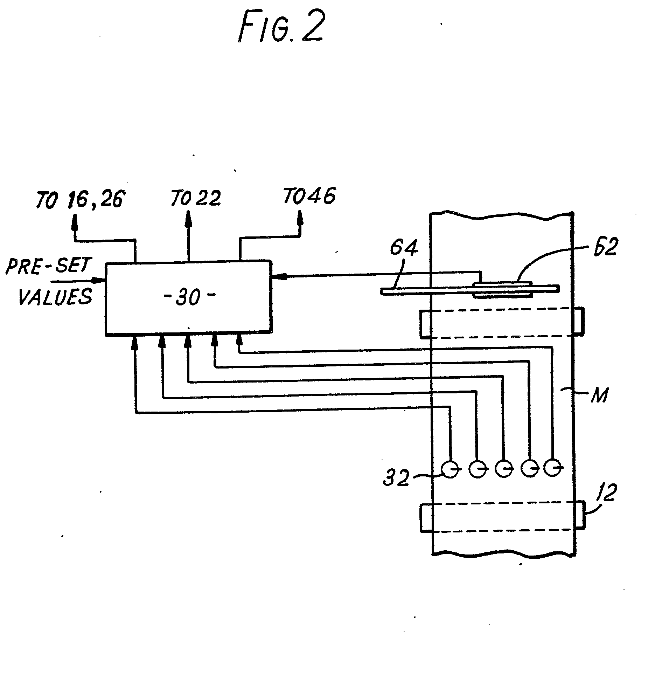

The movements of the rams during the operation of the arrangement to control the temperature of a steel strip travelling along the conveyor path is governed by a control unit 30 (Fig. 2) receiving signals from an array of temperature sensors 32 disposed across the width of the strip. If the sensors indicate that the temperature at the edges of the strip is too high, the rams 22 between the cantilever arms and the upper rails 14 can be operated to tilt the outer edges of the upper panels upwards, the angle being adjusted to suit the required heat loss rate. If, on the other hand, the temperature at the centre of the strip is too high the panels 2 and/or 4 can be traversed on their rails so as to leave a gap at the centre, both above and below the strip, to allow increased radiation from that region. The extent of the opening movement and the number of panels opened along the length of the conveyor path can both be adjusted to suit the extent of the temperature correction required.

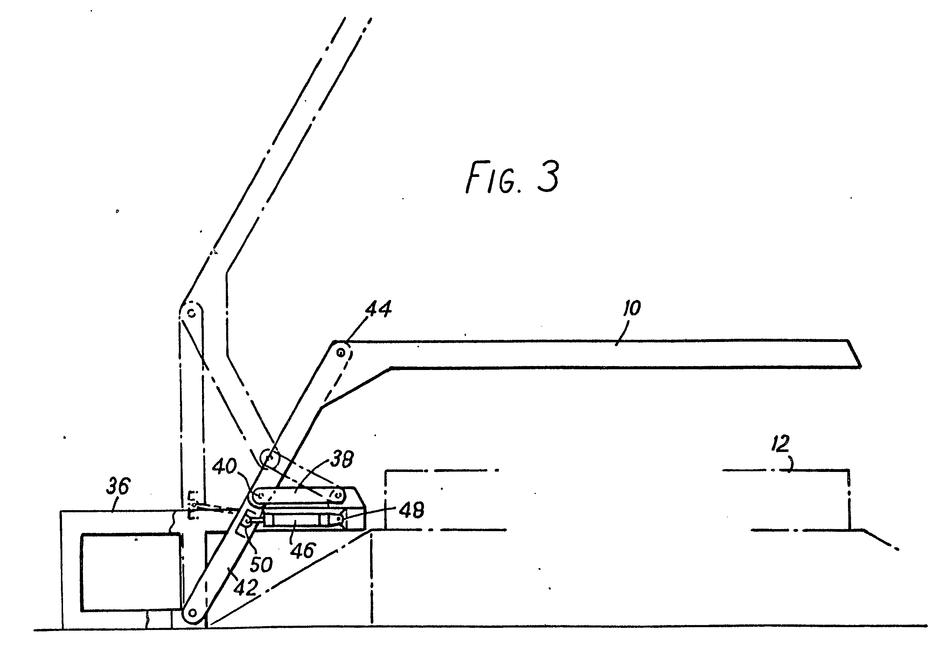

It is also possible to lift the support structure comprising the cantilever arms 10, together with the panels 2, this serving both as a means of temperature control for the strip and as a means of protection of the panels against damage from a bent or buckled strip. For this purpose, as may be more clearly seen from Fig. 3, each arm 10 is mounted on a fixed frame 36 through a lifting mechanism comprising a normally horizontally shorter link 38 pivoted at 40 to the lower end of the arm and a longer link 42 pivoted at 44 intermediate the length of the arm and normally lying parallel to the cranked end portion of the arm. The arm 10 is displaced by drive means comprising a ram 46 attached to one end 48 to the frame 36 and its other end 50 being connected to the longer link 42. The mechanism operates, when the ram 46 is extended, to produce a magnified pivoting movement of the arm 10, as shown in Fig. 3, the stroke of the ram being set so that the panels can be raised to a nearly vertical position, leaving clear access to the roller table.

As already indicated, the ram 46 can be operated by the automatic control means to regulate the temperature of the material. This can be done when it is required to lower the temperature of the strip as a whole rather than alter the temperature distribution, and normally it will be sufficient for only a small length of the total length of the upper series of heat shield panels to be lifted away for this purpose. The number of panels so raised will determine the cooling effect obtained. The rams 46 are also automatically operated if a bent or buckled strip is in the mill. The bumper bars 6 provide initial protection in this eventuality, but they are also provided with sensor elements (not shown) such as pressure-sensitive switches so that as the strip bears against them to lift them, the sensor elements actuate the rams 46 and the upper panels are immediately raised clear of the strip, whether or not they have actually been contacted by the deformed strip.

It will be understood that the control unit may comprise means for readily adjusting the set points or required temperature limits to suit different materials being processed, and there may be a number of arrays of temperature sensors at different stations along the length of the strip conveyor path, either operating upon the same control unit or operating upon separate control units for individual stations of the conveyor path.

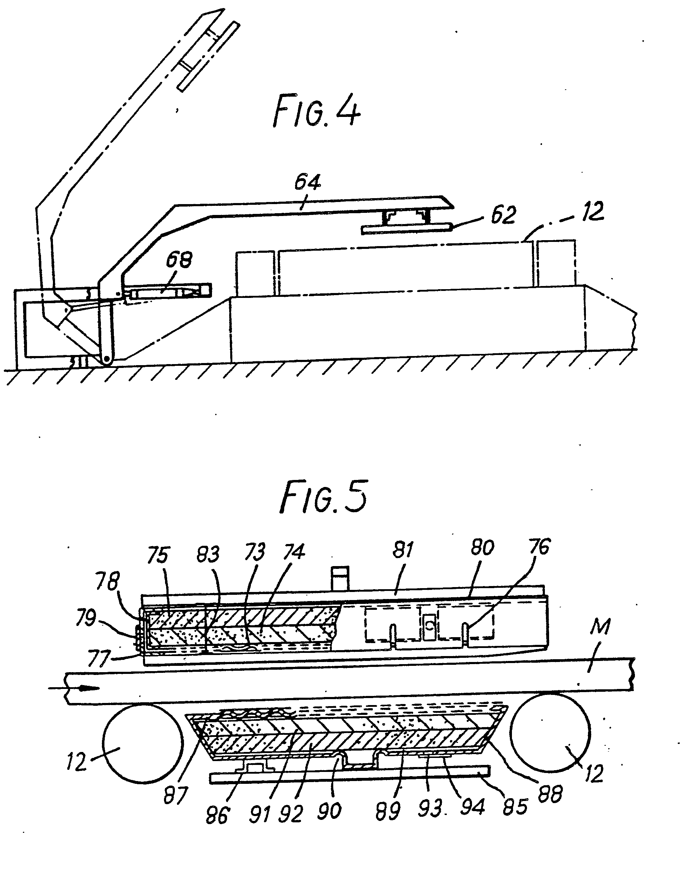

Additionally or alternatively to the bumper bars, one or more further support arms may carry a bent stock detector 62 (Figs. 2 and 4) having a contact member disposed over the conveyor upstream of the panels to indicate the approach of raised parts of the strip that might damage the panels and thereby actuate lifting of the panels. The detector can comprise a support arm 64 having a simple pivot mounting 66 controlled by a ram 68, to swing the detector clear of the conveyor when required, but it may alternatively have the same form of displacement mechanism as the panel support arms 10.

The panels 2, 4 may be constructed in a preferred form shown in Fig. 5. In this, the upper panel comprises a casing containing a two-layer core of heat-insulating material consisting of high temperature ceramic fibre board insulation 74 adjoining a bottom cover plate 73 forming the hot face of the panel, the insulation 74 being backed by lower temperature insulating board 75. The cover plate 73 is formed by a thin sheet of temperature resistant material, e.g. stainless steel, which material can be made either heat reflecting or absorbing, and preferably has corrugations, dimples or other local contouring. The cover plate rests upon heat-resistant angle-section frame 77 of the casing, which allows free thermal expansion of the plate, and slots 76 in the frame also allow its relative thermal expansion. The top of the panel is sealed by a top plate 80 to which is fixed a mounting lug 81.

The cover plate is held from above against the horizontal flanges of the frame 77 by leaf springs 78 to help provide a seal between the plate and the frame and so minimise the intrusion of dirt and steam into the ceramic fibre core. Vents 79 can also be provided in the side walls of the mounting frame 77 to facilitate the escape of steam if, as during periods of inactivity, water is absorbed by the core and is subsequently vaporised by the heating that occurs when the panel begins to be used again. One-way flap valves 94 on the vents 79 help to prevent the ingress of steam from the surroundings. It should be noted that if the cover plate is very thin, extra retaining clips 83 may be required to hold it against the ceramic fibre material of the core.

In many respects the lower panels are of similar construction to the upper panels. As shown in Fig. 5, each lower panel is supported on the table base plate 85 and can rest thereon either directly or through brackets 86. The cover plate 87 forming the hot face of the lower panel has local contouring like the plate 73 but forms an integral part of an outer casing of welded construction with stainless steel side walls 88 and base 89 as below the strip greater protection is needed against the ingress of foreign matter. The contouring is preferably in the form of a series of parallel corrugations arranged particularly to accommodate thermal expansion of the hot face relative to the remainder of the panel, but because the cover plate is restrained at its edges, the casing is made relatively narrow in the direction of the corrugations, e.g. some half the length transverse thereto. The corrugations also increase the effective emissivity of the hot face, as mentioned above, and strengthen the relatively thin material.

The base of the casing has one or more corrugations 90 or like local contouring to allow differential thermal expansion and the panel is filled with a core of higher and lower temperature insulating ceramic fibre panels 91, 92 respectively, similar to the upper panel core. Small steam vents 93 are provided in the base of the panel to allow venting of trapped water and these are normally closed by one-way flap valves 94.

Heat radiated from the strip will impinge on the cover plates of the panels. Initially the front end of the strip will cool at almost the rate it would achieve in free air while the cover plates are cool. If the plates are thin — for example, less than 1/50th of the thickness of the hot strip — then their temperature will quickly rise towards the strip temperature without a significant drop in strip temperature, and as heat loss into the panels is minimised by the thermally insulating core and the panels almost immediately begin to re-radiate heat, and temperature equilibrium is established with the strip to give it a more uniform temperature as it enters a roll stand.

The total effective emissivity of the cover plates of the re-radiating panels is increased by the substantial corrugating or dimpling or like local contouring of their surface, and since the cover plates are preferably very thin such contouring can serve to strengthen the plates and allow local flexing to facilitate relaxation of thermal stresses set up by rapid heating and cooling of the plates.

The cover plates can be heat-reflecting but in general it will be found convenient to make them black to suit the dirty environmental conditions and in this case they can operate better to improve the temperature distribution in the common condition of a strip with a higher temperature leading end, or where there is some time lag in the passage of the trailing end to a roll stand.

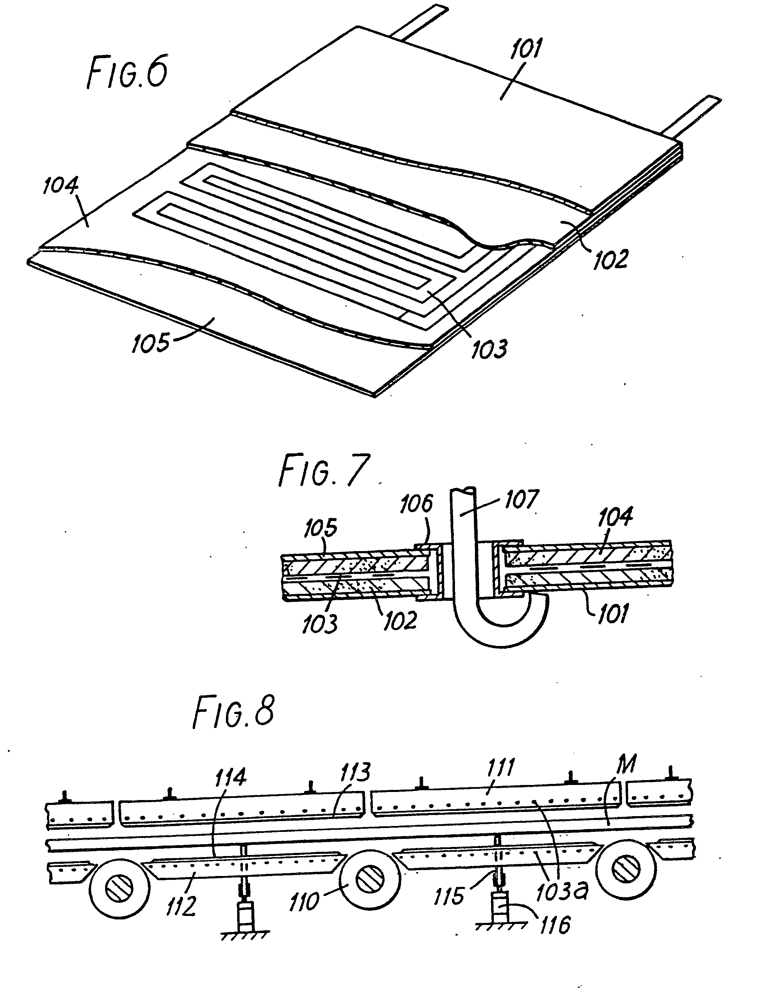

In some circumstances it may be required not only to conserve the heat in the material being processed but also to apply further heating. For example, this might be necessary if the material is to be held at a constant temperature. It is possible then to provide heating means in or on the insulation panels themselves, as is illustrated in Fig. 6 and Fig. 7. These show a multi-layer cover plate, with a front plate 101 forming the hot face of the panel, a first electrically insulating layer 102, an electrical strip heating element 103 capable of operating at a temperature of 1100°C or more, a second insulating layer 104, and a back plate 105 that like the front plate is suitable for use at high temperatures. The layers are secured together by hollow rivets 106 that may also serve to receive suspension ties 107 for the panel, although panels with cover plates of this construction are suitable for mounting both above and below the material being shielded. To maintain the material temperature, the element 103 may be of relatively low power, e.g. up to 5 kw/m² but higher powers may be used when required. It will be clear without further illustration that the control unit 30 can also regulate the operation of the heating elements.

The use of panels with heating elements is shown in the heat shield arrangement in Fig. 8, although tubular sheathed elements 103a are illustrated. This example shows a further heat conservation measure, it being assumed that the arrangement is employed with an existing steel mill roller table, which will be equipped with large diameter rollers 110 of high thermal capacity, often water-cooled. The upper and lower thermal insulation panels 111, 112 have the general composite construction already described and both series of panels are arranged in pairs side-by-side, with a central skid bar or like contact member 113 and 114 respectively, between the panels of each pair. The lower panels are also so constructed that there are two or more successive panels along the distance between adjacent rollers 110, and between these successive panels lifting members in the form of transversely extending lifting bars 115 are interposed. These bars, of a high temperature alloy and possibly also provided with heat insulation, can be raised, e.g. by fluid pressure rams 116, to the position shown and so lift the material M from the rollers 110. The mechanism can be used when the operation of the mill requires the material on the roller table to be stopped for any significant length of time. Because of the thermal mass and/or the cooling of the rollers, there would be the risk that cold spots would develop in the material at the regions of contact with the rollers, and that these would affect the uniformity of the final product.

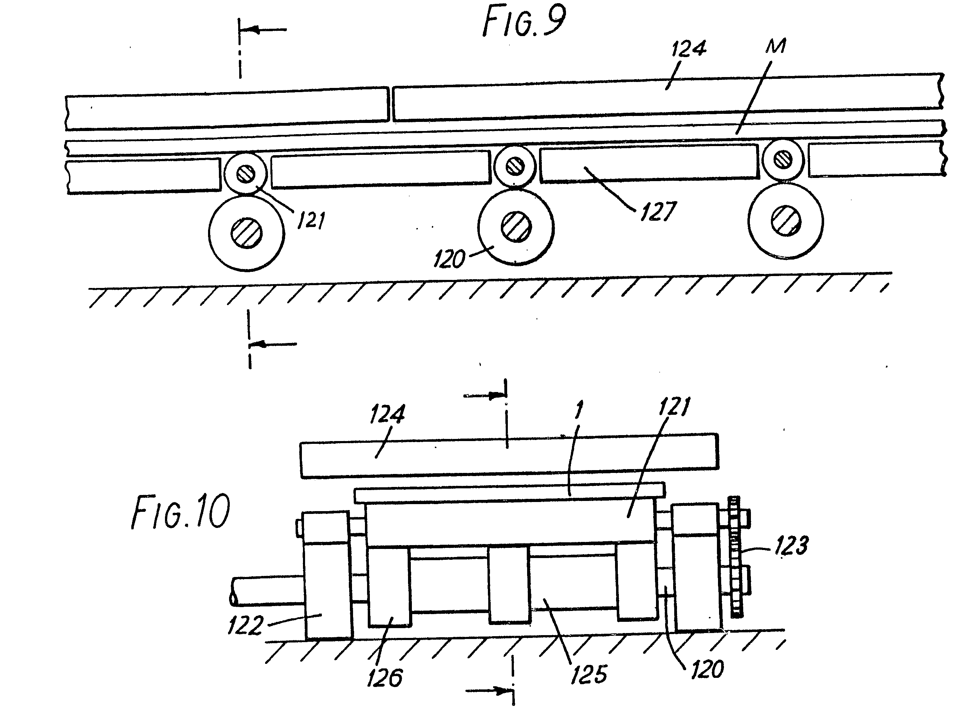

The problem of avoiding undue heat loss to the rollers can alternatively be overcome by modification of the roller table construction in the manner illustrated in Figs. 9 and 10. The main supporting rollers 120 have smaller rollers 121 resting on them, the rollers 121 being of a heat insulating material. Both series of rollers are journalled in a housing assembly 122 and are driven together, as by the gearing 123. It may be arranged that the housing assembly can readily be opened to remove the rollers 121 at least, when servicing is needed. The upper heat-insulating panels 124 can be lifted clear in the manner already described when this is to be done.

The main rollers preferably have reduced diameter portions 125 so that the contact area between the rollers 120, 121 is confined to the relatively small extent of the larger diameter portions 126, so reducing any heat loss through conduction. If scale drops from the material on the table this measure also helps the scale to fall clear. It is a further advantage in the use of the smaller diameter high-temperature rollers that the lower heat-insulating panels 127 can be brought closer together, so that there is a further reduction of heat loss by radiation.

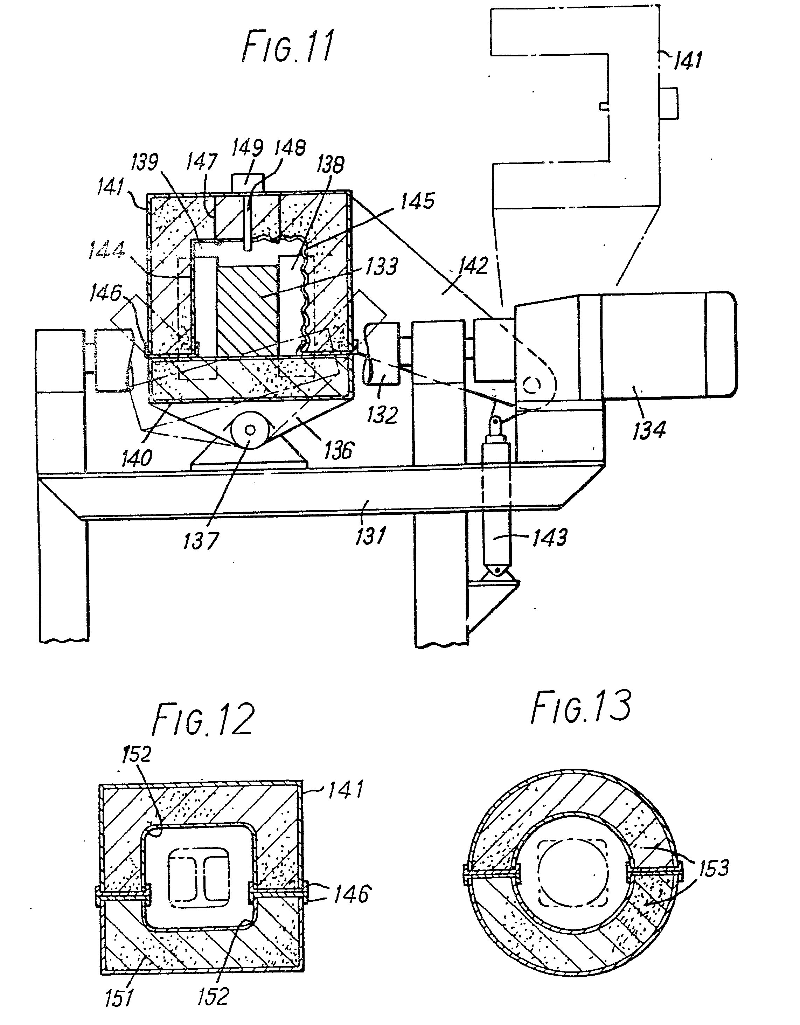

The invention is not restricted to installations in which the heated material is in strip form, and Figs. 11 to 13 illustrate the application of the invention to control the temperature of bar or profiled section stock moving along a conveyor path.

Mounted on a fixed frame 131 are drive rollers 132 for the stock 133, shown here as a square section bar, driven by one or more motors 134. The conveyor path runs perpendicular to the plane of the figure. Mountings 136 pivotable about an axis 137 parallel to the conveyor path carry upwardly projecting side support rollers 138 for the stock and lower heat shield panels 140 of the composite construction already described. Together with upper U-form panels 141 of similar construction these lower panels 140 form a tubular enclosure 139 for the stock. The upper panels 141 are displaceable on pivotable support means 142 that allow them to be swung upwards to the broken-line position by rams 143, clear of the conveyor and the stock on it. When the upper panels have been swung away in this manner, the side support rollers 138 can be pivoted downwards to give free access to the stock, in particular to allow bent or damaged stock to be removed more easily. The pivoting of the mountings 136 for the bottom panels allows them to be tilted when the installation is being serviced to shake off any accumulation of mill scale or other foreign matter.

Because the top panel has a cross-sectional profile that increases its stiffness as compared with the flat panels so far described, it can be made considerably longer: it may have flat faces 144 or axial corrugations 145 can be provided to stiffen the inner cover plate, as has already been described. This inner cover plate is allowed some freedom to expand axially and laterally and is retained in place by lipped edges 146 of the panel casing and heat-resistant ties 147 passing through the inner core of insulating material. A contact member or bumper bar 148 projects through the top panels to protect them from being damaged by out-of-shape material. As already described, the bar can be displaceably mounted relative to the panels 141 and be provided with impact sensors 149 arranged to trigger the operation of the lifting rams 143 for raising the top panels.

The cross-sectional profile of the panels can be varied, for example, to suit a particular cross-section profile material, as is exemplified in Figs. 12 and 13. In Fig. 12, like the upper panel 141, the bottom panel 151 also has a U-form profile increasing its stiffness and the radiussing of the cover plates at the inner corners 152 of the panels can improve the uniformity of the temperature of the stock passing through the arrangement. The corners of rectangular stock or even of the outer edges of the flanges of the I-section shown will normally radiate heat more freely and so cool faster, but the increased insulation of the radiussed corners of the panels has an opposite and therefore compensating effect. A similar effect can be obtained with the configuration shown in Fig. 13, where both panels 153 have a semi-circular cross-section. The other features described with reference to Fig. 11 can of course also be provided in heat shield arrangements using these panels of different profiles.

## Claims

1. A heat shield arrangement for hot material being processed in a hot-rolling mill, e.g. for metal strip or for rolled metal sections, the arrangement comprising a series of heat insulating panels (2 or 111 or 124 or 141) above the path of the material (M) being processed, the panels each having a heat-insulating core (74, 75) and a cover plate (73) forming or overlying a main face of the panel being adapted to act as a hot face presented to the material being processed and to radiate heat back to the material, characterised in that the series of panels (2 or 111 or 124 or 141) are provided with drive means (46 or 143) for displacing them on their supports (10 or 142) upwardly away from the path of the material (M) and sensing means being provided comprising a contact member (6 or 62 or 148) upwardly displaceable relative to the panels being provided to detect lifting or distortion of the material and to actuate automatically said drive means to lift the panels away from the material to protect them against damage.

2. A heat shield arrangement according to claim 1 wherein said contact member (62) is provided along the material path preceding said series of panels protected by the contact member.

3. A heat shield arrangement according to claim 1 wherein said contact member (6 or 148) is disposed within the extent of the panels (2 or 141).

4. A heat shield arrangement according to claim 3 for the processing of material in the form of hot strip or billets, wherein the panels (2) are arranged in groups of two or more panels disposed side-by-side and are automatically displaceable independently of said contact member (6) under the action of control means (30) to vary their heat-insulating effect on a central region of the material relative to the lateral margins thereof, said control means being actuable by at least one array of temperature sensors (32) laterally spaced across the material path.

5. A heat shield arrangement according to claim 4 wherein the panels (2) are displaceably mounted on their supports (10) for said variation of their heat-insulating effect and said supports are connected to the drive means (46) for the joint upward displacement of the panels to protect them against damage.

6. A heat shield arrangement according to claim 4 or claim 5 wherein for said variation of their heat-insulating effect said panels (2) disposed side-by-side are arranged to be displaceable laterally towards and away from each other and/or to be tilted to move the laterally outer regions of the panels towards and away from the material path.

7. A heat shield arrangement according to any one of claims 4 to 6 wherein at least some of the panels are provided with heating means (103, 103a) regulated by said control means (30).

8. A heat shield arrangement according to any one of claims 4 to 7 further comprising a lower series of heat-insulating panels (4 or 112 or 140 or 127) disposed below the material, and means (26) are connected to said plurality of panels of the lower series for displacing the panels towards and away from each other to vary their heat-insulating effect on a central region of the material relative to lateral margins thereof.

9. A heat shield arrangement according to claim 8 wherein lifting members (115) are provided adjacent the lower series of panels (112) for raising the material (M).

10. A heat shield arrangement according to any one of the preceding claims wherein a lower series of heat-insulating panels (127) beneath the path of the material (M) are disposed between successive smaller diameter rollers (121) of a roller table arranged to have the material resting upon them and larger diameter supporting rollers (120) on supporting said smaller diameter rollers.

11. A heat shield arrangement according to claim 10 wherein the lower rollers (120) have a plurality of axially spaced larger diameter portions (126) with which the smaller diameter rollers (121) are in contact.

12. A heat shield arrangement according to any one of claims 1 to 3 wherein the panels (140, 141 or 141, 151 or 153) form a tubular enclosure (139) to surround all sides of the material path.

13. A heat shield arrangement according to claim 12 wherein support rollers (138) for the material are disposed within the tubular enclosure (139) provided by the panels.

14. A heat shield arrangement according to claim 12 or claim 13 wherein the panels (140) below the material path are supported on pivot mountings (136, 137) to be tiltable laterally for the removal of foreign matter.

15. A heat shield arrangement according to any one of the preceding claims wherein heating means (103) are provided in at least some of the panels immediately adjacent their cover plates.

16. A heat shield arrangement according to any one of the preceding claims wherein suspension elements (107) for said series of panels above the material path extend through the panels to engage the panel cover plates (101).

## Revendications

1. Un dispositif écran de chaleur pour une matière chaude en cours de traitement dans un laminoir à chaud, par exemple pour un métal en bande ou pour des profilés métalliques laminés, le dispositif comprenant une série de panneaux isolants de la chaleur (2 ou 111 ou 124 ou 141) au-dessus du trajet de la matière (M) en traitement, les panneaux ayant chacun un noyau (74, 75) isolant de la chaleur et une plaque de revêtement (73) formant our recouvrant une face principale du panneau étant adaptée pour agir comme une face chaude présentée à la matière en traitement et rayonner la chaleur en retour vers la matière, caractérisé en ce que les séries de panneaux (2 ou 111 ou 124 ou 141) sont munies de moyens d'entraînement (46 ou 143) pour les déplacer sur leurs supports (10 ou 142) vers le haut en s'éloignant du trajet de la matière (M) et en ce que sont prévus des moyens capteurs qui comprennent un organe de contact (6 ou 62 ou 148) qui peut être déplacé vers le haut par rapport aux panneaux, et aptes à détecter un soulèvement ou une déformation de la matière et pour actionner automatiquement lesdits moyens d'entraînement pour soulever les panneaux dans le sens qui les éloigne de la matière pour les protéger de la détérioration.

2. Un dispositif écran de chaleur suivant la revendication 1, dans lequel ledit organe de contact (62) est prévu sur le trajet de la matière qui précède ladite série de panneaux protégés par l'organe de contact.

3. Un dispositif écran de chaleur suivant la revendication 1 dans lequel ledit organe de contact (6 ou 148) est disposé dans les limites des paneaux (2 ou 141).

4. Un dispositif écran de chaleur suivant la revendication 3 pour le traitement d'une matière présentée sous la forme d'une bande chaude ou de billettes chaudes, dans lequel les panneaux (2) sont agencés par groupes de deux ou plus de deux panneaux disposés côte à côte et sont déplacés automatiquement indépendamment dudit organe de contact (6) sous l'action de moyens de commande (30), pour faire varier leur effet d'isolation de la chaleur sur une région centrale de la matière relativement aux bords latéraux de cette matière, lesdits moyens de commande pouvant être actionnés par au moins un rang de capteurs de température (32) espacés latéralement en travers du trajet de la matière.

5. Un dispositif écran de chaleur suivant la revendication 4, dans lequel les panneaux (2) sont montés mobiles sur leurs supports (10) pour permettre ladite variation de leur effect d'isolation de la chaleur et lesdits supports sont reliés aux moyens d'entraînement (46) pour le déplacement concomitant des panneaux vers le haut pour les protéger des détériorations.

6. Un dispositif écran de chaleur suivant la revendication 4 ou la revendication 5 dans lequel, pour ladite variation de leur effet d'isolation de la chaleur, lesdits panneaux (2) disposés côte à côte sont agencés pour pouvoir être rapprochés et éloignés latéralement l'un de l'autre et/ou pour être inclinés de manière à rapprocher et à éloigner latéralement les régions extérieures des panneaux du trajet de la matière.

7. Un dispositif écran de chaleur suivant l'une quelconque des revendications 4 à 6, dans lequel au moins certains des panneaux sont munis de moyens de chauffage (103, 103a) régulés par lesdits moyens de commande (30).

8. Un dispositif écran de chaleur suivant l'une quelconque des revendications 4 à 7 comprenant en outre une série inférieure de panneaux isolants de la chaleur (4 ou 112 ou 140 ou 127) disposés au-dessous de la matière, et des moyens (26) étant reliés audit ensemble de panneaux de la série inférieure pour rapprocher et éloigner les panneaux les uns des autres pour faire varier leur effet d'isolation de la chaleur sur une région centrale de la matière relativement aux bords latéraux de cette matière.

9. Un dispositif écran de chaleur suivant la revendication 8 dans lequel des moyens élévateurs (115) sont prévus adjacents à la série inférieure de panneaux (112) pour soulever la matière (M).

10. Un dispositif écran de chaleur suivant l'une quelconque des revendications précédentes dans lequel une série inférieure de panneaux isolants de la chaleur (127) situés sous le trajet de la matière (M) sont disposés entre des rouleaux successifs (121) de petit diamètre d'un banc à rouleaux agencés pour que la matière repose sur eux et des rouleaux supports de grand diamètre (120) qui supportent les rouleaux de petit diamètre.

11. Un dispositif écran de chaleur suivant la revendication 10 dans lequel les rouleaux inférieurs (120) possèdent plusieurs portions de grand diamètre (126) espacées axialement avec lesquelles les rouleaux de petit diamètre (12) sont en contact.

12. Un dispositif écran de chaleur suivant l'une quelconque des revendications 1 à 3, dans lequel les panneaux (140, 141 ou 141, 151 ou 153) forment une enceinte tubulaire (139) pour entourer tous les côtés du trajet de la matière.

13. Un dispositif écran de chaleur suivant la revendication 12 dans lequel des rouleaux supports (138) pour la matière sont disposés dans l'enceinte tubulaire (139) formée par les panneaux.

14. Un dispositif écran de chaleur suivant la revendication 12 ou la revendication 13, dans lequel les panneaux (140) situés sous le trajet de la matière sont supportés sur des supports pivotant (136, 137) pour pouvoir être inclinés latéralement pour l'élimination des matières étrangères.

15. Un dispositif écran de chaleur suivant l'une quelconque des revendications précédentes dans lequel des moyens de chauffage (103) sont prévus dans au moins certains des panneaux en position immédiatement adjacente à leurs plaques de revêtement.

16. Un dispositif écran de chaleur suivant l'une quelconque des revendications précédentes dans lequel des éléments de suspension (107) pour ladite série de panneaux situés au-dessus du trajet de la matière s'étendent à travers les panneaux pour se mettre en prise avec les plaques (101) de revêtement des panneaux.

## Patentansprüche

1. Hitzeschild für ein heißes Material, das in einem Warmwalzwerk bearbeitet wird, beispielsweise für Metallstreifen oder für aufgewickelte Metallabschnitte, bestehend aus einer Reihe wärmeisolierender Tafeln (2 oder 111 oder 124 oder 141), die über der Bahn des zu bearbeitenden Materials (M) angeordnet ist, wobei die Tafeln jeweils einen wärmeisolierenden Kern (74, 75) und eine Deckplatte (73) aufweisen, die eine Hauptfläche der Tafel bildet oder bedeckt, die geeignet ist, als eine dem zu bearbeitenden Material zugekehrte heiße Fläche zu dienen und Wärme an das Material zurückzustrahlen, dadurch gekennzeichnet, daß die Reihe von Tafeln (2 oder 111 oder 124 oder 141) mit einer Antriebseinrichtung (46 oder 143) versehen ist, um sie auf ihren Abstützungen (10 oder 142) von der Bahn des Materials (M) weg nach oben zu verlagern, und daß eine Fühleinrichtung mit einem Kontaktstück (6 oder 62 oder 148) vorgesehen ist, das gegenüber den Tafeln nach oben bewegbar ist, um eine Aufwärtsbewegung oder Verformung des Materials zu ermitteln und die Antriebseinrichtung automatisch zu betätigen, um die Tafeln von dem Material abzuheben, damit sie gegen eine Beschädigung geschützt sind.

2. Hitzeschild nach Anspruch 1, dadurch gekennzeichnet, daß das Kontaktstück (62) längs der Bahn des Materials angeordnet ist, die der durch das Kontaktstück zu schützenden Reihe von Tafeln vorhergeht.

3. Hitzeschild nach Anspruch 1, dadurch gekennzeichnet, daß das Kontaktstück (6 oder 148) innerhalb der Erstreckung der Tafeln (2 oder 141) angeordnet ist.

4. Hitzeschild nach Anspruch 3 für die Bearbeitung eines Materials in Form eines heißen Streifens oder von Barren, dadurch gekennzeichnet, daß die Tafeln (2) nebeneinander in Gruppen von zwei oder mehr Tafeln angeordnet sind und mittels einer Steuereinrichtung (30) unabhängig von dem Kontaktstück (6) automatisch verlagerbar sind, um ihre wärmeisolierende Wirkung auf einen zentralen Bereich des Materials relativ zu dessen Seitenrändern zu verändern, wobei diese Steuereinrichtung durch mindestens eine Anordnung von Temperaturfühlern (32) betätigbar ist, die im seitlichen Abstand quer zur Bahn des Materials angeordnet sind.

5. Hitzeschild nach Anspruch 4, dadurch gekennzeichnet, daß die Tafeln (2) zur Veränderung ihrer wärmeisolierenden Wirkung auf ihren Abstützungen (10) verlagerbar angeordnet sind und daß die Abstützungen mit der Antriebseinrichtung (46) verbunden sind, um die Tafeln zum Schutz vor einer Beschädigung gemeinsam nach oben zu verlagern.

6. Hitzeschild nach Anspruch 4 oder 5, dadurch gekennzeichnet, daß die nebeneinanderliegenden Tafeln (2) zur Veränderung ihrer wärmeisolierenden Wirkung so angeordnet sind, daß sie seitwärts zueinander hin oder voneinander weg verlagerbar sind und/oder kippbar sind, um die seitwärts äußeren Bereiche der Tafeln zu der Bahn des Materials hin oder von dieser weg zu bewegen.

7. Hitzeschild nach einem der Ansprüche 4 bis 6, dadurch gekennzeichnet, daß zumindest einige der Tafeln mit einer von der Steuereinrichtung (30) gesteuerten Heizeinrichtung (103, 103a) versehen sind.

8. Hitzeschild nach einem der Ansprüche 4 bis 7, gekennzeichnet durch eine untere Reihe wärmeisolierender Tafeln (4 oder 112 oder 140 oder 127), die unter dem Material angeordnet ist, und mit der Vielzahl der Tafeln der unteren Reihe verbundenen Einrichtungen (26), um die Tafeln zueinander hin und voneinander weg zu bewegen, um deren wärmeisolierende Wirkung auf einen zentralen Bereich des Materials relativ zu dessen Seitenrändern zu verändern.

9. Hitzeschild nach Anspruch 8, dadurch gekennzeichnet, daß neben der unteren Serie von Tafeln (112) Hubeinrichtungen (115) zum Anheben des Materials (M) angeordnet sind.

10. Hitzeschild nach einem der vorhergehenden Ansprüche, dadurch gekennzeichnet, daß eine untere Serie wärmeisolierender Tafeln (127) unter der Bahn des Materials (M) zwischen aufeinanderfolgenden Rollen (121) mit kleinerem Durchmesser eines Rollentisches angeordnet sind, die so angeordnet sind, daß das Material auf ihnen aufliegt und die von Rollen (120) mit größerem Durchmesser abgestützt sind.

11. Hitzeschild nach Anspruch 10, dadurch gekennzeichnet, daß die unteren Rollen (120) mehrere in axialem Abstand angeordnete Abschnitte (126) von größerem Durchmesser aufweisen, mit denen die Rollen (121) mit kleinerem Durchmesser in Berührung stehen.

12. Hitzeschild nach einem der Ansprüche 1 bis 3, dadurch gekennzeichnet, daß die Tafeln (140, 141 oder 141, 151 oder 153) einen rohrförmigen Mantel (139) bilden, der alle Seiten der Bahn des Materials umgibt.

13. Hitzeschild nach Anspruch 12, dadurch gekennzeichnet, daß Stützrollen (138) für das Material innerhalb des von den Tafeln gebildeten rohrförmigen Mantels (139) angeordnet sind.

14. Hitzeschild nach Anspruch 12 oder 13, dadurch gekennzeichnet, daß die unter der Bahn des Materials angeordneten Tafeln (140) auf Schwenklagern (136, 137) zur Beseitigung von Fremdkörpern seitwärts schwenkbar gelagert sind.

15. Hitzeschild nach einem der vorhergehenden Ansprüche, dadurch gekennzeichnet, daß die Heizeinrichtungen (103) in mindestens einigen Tafeln unmittelbar neben deren Deckplatten angeordnet sind.

16. Hitzeschild nach einem der vorhergehenden Ansprüche, dadurch gekennzeichnet, daß Aufhängeelemente (107) für die über der Bahn des Materials angeordnete Reihe von Tafeln durch die Tafeln hindurchragen, um deren Deckplatten (101) zu erfassen.

FIG. 1

0 005 340

# FIG. 2

TO 16, 26    TO 22    TO 46

PRE-SET
VALUES          -30-

64          62

M

32

12

2

FIG. 3

## FIG.4

64

62

12

68

## FIG.5

75 83 73 74 81 80 76

78

79

77

M

12

12

87 86 91 92 90 89 93 94 85 88

4

FIG.6

101

104

102

105

103

FIG.7

105  106  107  104

103  102  101

FIG.8

114  113  111  M

112  110  115  103a

116

5

Fig.9

Fig.10

## FIG.11

## FIG.12

## FIG.13